# EUROPÄISCHE PATENTSCHRIFT

(11) **EP 1 228 563 B1**
(45) Veröffentlichungstag und Bekanntmachung des Hinweises auf die Patenterteilung: **21.01.2009**
(21) Anmeldenummer: 00984835.9
(22) Anmeldetag: 18.10.2000
(51) Int. Cl.: H02P 6/14

(54) **ELEKTRONISCH KOMMUTIERBARER MOTOR**
ELECTRONICALLY COMMUTABLE MOTOR
MOTEUR A COMMUTATION ELECTRONIQUE

(30) Priorität: 26.10.1999 DE 19951364
(43) Veröffentlichungstag der Anmeldung: 07.08.2002
(73) Patentinhaber: ROBERT BOSCH GMBH, 70442 Stuttgart (DE)
(72) Erfinder: LURK, Volker, 77652 Offenburg (DE); SUTTER, Joerg, 76571 Gaggenau (DE); KRAUTH, Wolfgang, 77855 Achern-Sasbachried (DE); SCHWENK, Wolfgang, 77704 Oberkirch-Tiergarten (DE); BERLING, Claude, F-67410 Drusenheim (FR)
(86) Internationale Anmeldenummer: PCT/DE2000/003667
(87) Internationale Veröffentlichungsnummer: WO 2001/031772

(56) Entgegenhaltungen:
- US-A- 4 385 265
- US-A- 4 814 674
- US-A- 5 712 539
- US-A- 5 767 641
- US-A- 5 780 986
- US-A- 5 869 946
- US-A- 6 002 226

## Beschreibung

Die Erfindung betrifft ein Verfahren zum Steuern eines elektronisch kommutierbaren Motors, dessen Erregerwicklungen über Halbleiter-Endstufen mittels Steuersignalen mit einer Kommutierungsfrequenz nacheinander angesteuert und mit einer Versorgungsgleichspannung verbunden und von dieser abgeschaltet werden, wobei sich die aufeinander folgenden Steuersignale überlappen und im Überlappungsbereich mindestens eines der Steuersignale pulsweitenmoduliert getaktet wird, so dass der Strom in den Erregerwicklungen in den Anstiegsflanken zunimmt und in den Abfallflanken abnimmt und wobei die Steuersignale in Abhängigkeit von einem vorgebbaren Sollwert der Drehzahl oder der Leistung des Motors verändert werden.

Ein Verfahren zum Steuern eines Motors dieser Art ist aus der DE 39 40 569 C2 und der US-A 5,712,539 bekannt. Dabei werden die stetig ansteigenden bzw. abnehmenden Kommutierungsflanken der Phasenströme mit vorgegebenem Verlauf verlustarm erzielt. Diese Art der Ansteuerung der Erregerwicklungen hat zudem den Vorteil, dass durch die Taktung der Steuersignale im Überlappungsbereich bei geringer Schaltverlustleistung noch eine Geräuschreduzierung erreicht wird. Die dauernde Ansteuerung der Phasen in den eigentlichen Kommutierungsphasen (außer Anstiegs- und Abfallflanke) bringt jedoch erhebliche Schwierigkeiten bei der Ausnutzung des Motors für einen größeren Drehzahl- oder Leistungsbereich.

Wie die DE 195 00 900 A1 zeigt, ist es auch bekannt, im Kommutierungszeitpunkt zusätzlich zur Bestromung der in Kommutierungsrichtung nachfolgenden Wicklungsstränge die in Kommutierungsrichtung vorangehenden Wicklungsstränge unter gesteuerter Absenkung der Stromstärke fortzusetzen. Dadurch soll ein Einbruch des Gesamtstromes der Wicklungsstränge als auch ein Drehmomenteinbruch im Kommutierungszeitpunkt vermieden werden. Der in Kommutierungsrichtung vorangehende Wicklungsstrang wird aber pulsweitenmoduliert mit abnehmendem Pulsweitenverhältnis bestromt. Über die Bestromung der nachfolgenden Wicklungsstränge und die Art und Weise der Absenkung der Bestromung der vorangehenden Wicklungsstränge in Abhängigkeit von anderen Betriebsgrößen wird nichts ausgesagt.

Bei einem Verfahren zum Steuern eines elektronisch kommutierbaren Motors nach der US 5,869,946 werden während des Kommutierungszeitpunktes zusätzliche PWM-Signale erzeugt und zwar für alle Phasen. Dadurch wird eine trapezförmige Form des Phasenstromes und damit eine konstante Gesamtleistung erreicht.

Aus der DE 31 07 623 A1, der US 5,767,641 und der US 5,780,986 ist bekannt, den Strom oder die Spannung für die Wicklungen eines bürstentosen Gleichstrommotors in den Anstiegs- und Abfallflanken in Abhängigkeit von der vorliegenden Belastung des Motors zu verändern.

Die EP 0 831 580 A2 zeigt einen elektronisch kommutierbaren Motor, bei dem die Steuersignale für die Wicklungen als pulsweitenmodulierte Signale ausgebildet werden, wobei das Pulsweitenverhältnis einem sinusförmigen Verlauf folgt. Dabei soll die Geräuschentwicklung reduziert werden. Dies geht jedoch auf Kosten der Leistung des Motors.

Es ist Aufgabe der Erfindung, ein Verfahren zum Steuern eines elektronisch kommutierbaren Motors der eingangs erwähnten Art so auszugestalten, dass mit einfachen pulsmodulierten Steuersignalen über den gesamten Kommutierungsbereich und über den gesamten Drehzahl- oder Leistungsbereich die Geräuscherzeugung unterbunden oder zumindest stark reduziert wird.

Diese Aufgabe wird nach der Erfindung dadurch gelöst, dass als Steuersignale pulsweitenmodulierte Signale mit einem vom vorgegebenen Sollwert abhängigen Betriebswert verwendet werden, dass in den Anstiegsflanken der Steuersignale das Pulsweitenverhältnis in einer vom Sollwert oder einem Istwert abhängigen Anzahl von m Stufen von einem niedrigen Anfangswert auf diesen Betriebswert zunehmend ausgebildet wird und dass in den Abfallflanken der Steuersignale das Pulsweitenverhältnis in einer Anzahl von n Stufen ausgehend von diesem Betriebswert abnehmend bis zu einem Abschaltendwert vorgenommen wird, bevor das Pulsweitenverhältnis auf den Wert Null zurückgeführt wird, wobei auch diese Anzahl von n Stufen vom Sollwert oder Istwert abhängig gewählt wird. Dabei werden der Anfangswert durch den dem Sollwert zugeordneten Betriebswert geteilt durch die Anzahl der m Stufen des Pulsweitenverhältnisses in den Anstiegsflanken und der Abschaltendwert durch den dem Sollwert zugeordneten Betriebswert geteilt durch die Anzahl der n Stufen des Pulsweitenverhältnisses in den Abfallflanken vorgegeben.

Durch die zusätzliche Anpassung der Steuersignale in den Anstiegs- und Abfallflanken der Steuersignale an den vorgegebenen Sollwert oder den vorliegenden Istwert der Drehzahl oder der Leistung des Motors wird über den Gesamt-Drehzahl- oder -Leistungsbereich des Motors eine erhebliche Geräuschreduzierung ereicht, ohne den Steuerungsaufwand zu sehr erhöhen zu müssen.

Da das Pulsweitenverhältnis in den Anstiegs- und/oder Abfallflanken nicht konstant gehalten wird, sondern sich in Abhängigkeit von dem Sollwert und/oder dem Istwert der Drehzahl oder der Leistung ändert, wird ein sanftes Ein- und Abschalten des Stromes im gesamten Arbeitsbereich des Motors erreicht. Eine starke Kraftwirkung auf die Pole und Erregerwicklungen des Stators tritt nicht mehr auf, so dass der Geräuschpegel stets wesentlich niedriger ist. Da die Änderung des Pulsweitenverhältnisses auch von dem Istwert der Drehzahl oder der Leistung des Motors abhängig gemacht wird, gilt dies für den gesamten Drehzahlbereich des Motors und die Geräuschreduzierung wird sowohl für den Einschalt- als auch Abschaltvorgang der Bestromung ereicht.

Nach einer Ausgestaltung ist vorgesehen, dass die m und n Stufen des Putsweitenverhältnisses in den Anstiegsflanken und/oder den Abfallflanken der Steuersignale sich mindestens über eine Periode der Taktfrequenz der PWM-Signale aufrecht erhalten werden. Die Anstiegs- und/oder Abfallflanken der Steuersignale können auchm und n Stufen von sich ändernden Pulsweitenverhältnissen aufweisen, die sich über jeweils eine größere Anzahl von Perioden der PWM-Signale erstrecken.

Ist eine Ausgestaltung so vorgenommen, dass vorgegebenen oder vorgebbaren Drehzahl- oder Leistungsbereichen des Motors unterschiedliche Anzahlen m und n von Stufen des Pulsweitenverhältnisses zugeordnet werden und dass entsprechend dem Istwert der Drehzahl oder der Leistung des Motors die zugeordnete Anzahl m und n von Stufen des Pulsweitenverhältnisses in den Anstiegsflanken und/oder den Abfallflanken der Steuersignale zur Wirkung gebracht werden, dann kann mit dem erfassten Istwert der Drehzahl oder der Leistung des Motors sofort die Anzahl m und n der Stufen in den Anstiegs- und/oder Abfallflanken der Steuersignale zugeordnet werden.

Dabei ist von Vorteil, wenn die unterschiedliche Anzahl m und n der Stufen mit 4, 8, 16 usw. mit der Grundzahl 2 und ganzzahligen Potenzen 1,2,3 usw. dargestellt wird, um den Aufwand in der Steuereinheit des Motors klein zu halten.

Für die schrittweise Änderung des Pulsweitenverhältnisses kann die Auslegung so sein, dass in den m Stufen der Anstiegsflanken der Steuersignale das Pulsweitenverhältnis von Stufe zu Stufe um den Anfangswert zunehmend gewählt wird, sowie dass in den n Stufen der Abfallflanken der Steuersignale das Pulsweitenverhältnis schrittweise von Stufe zu Stufe um den Abschalteendwert abnehmend gewählt wird.

Davon abweichend kann der Anfangswert und /oder der Abschalteendwert des Pulsweitenverhältnisses auch Null sein.

Ist vorgesehen, dass die pulsweitenmodulierten Steuersignale die Halbleiter-Endstufe voll durchsteuern, dann wird die Verlustleistung in den Halbleiter-Endstufen klein gehalten.

Ist die Kommutierung so, dass sich die Steuersignale für eine Halbleiter-Endstufen mit ihren Abfallflanken mit den Anstiegsflanken der Steuersignale der folgenden Halbleiter-Endstufe zumindest teilweise überlappen und dass auch im Überlappungsbereich der Steuersignale die Halbleiter-Endstufen individuell und unabhängig voneinander festlegbar sind, teilweise überlappen, dann sind auch im Überlappungsbereich die Steuersignale für die Halbleiter-Endstufen individuell und unabhängig.

Die Erfindung wird anhand eines in der Zeichnung dargestellten Ausführungsbeispiels näher erläutert. Es zeigen:
- Fig. 1: ein Blockschaltbild eines elektrisch kommutierbaren Motors mit seinen Funktionseinheiten,
- Fig. 2: ein Zeitdiagramm für den Stromverlauf in den Erregerwicklungen,
- Fig. 3: ein Zeitdiagramm von Kommutierungssignalen, die den Einschalt- und Abschaltzeitpunkt eines Steuersignals kennzeichnen und
- Fig. 4: in einem Spannungs-Zeit-Diagramm den Steuersignalverlauf der Halbleiter-Endstufen während einer Abfallflanke.

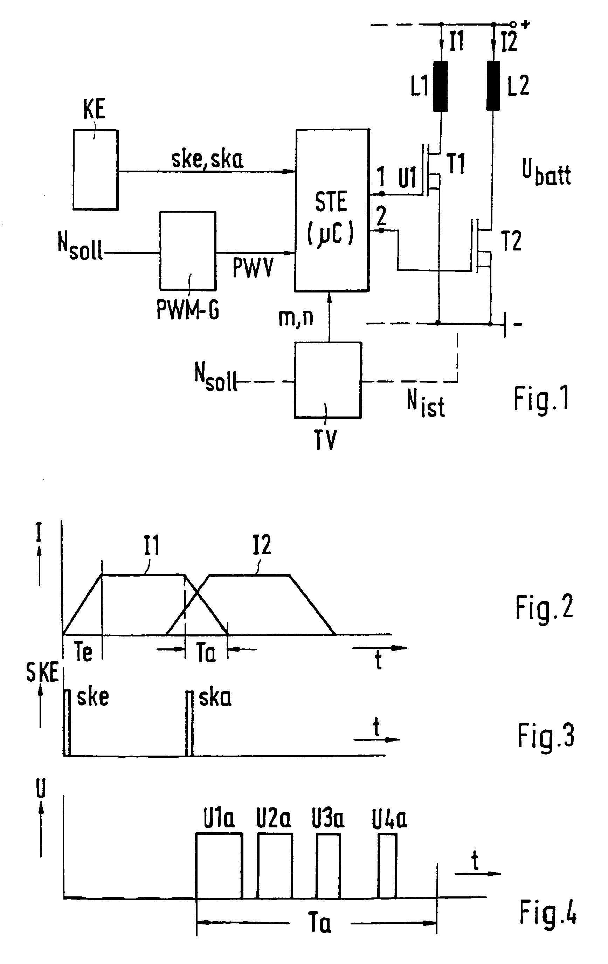

In Fig. 1 ist im schematischen Blockschaltbild der Aufbau eines elektronisch kommutierbaren Motors mit zwei Erregerwicklungen L1 und L2 dargestellt, die auch als Phasen bezeichnet werden. Halbleiter-Endstufen T1 und T2 verbinden bei voller Durchsteuerung die Erregerwicklungen mit der Versorgungsgleichspannung U_{batt}. Werden die Halbleiter-Endstufen T1 und T2 nicht angesteuert, dann sind die Erregerwicklungen L1 und L2 von der Versorgungsgleichspannung U_{batt} abgeschaltet, da die Halbleiter-Endstufen T1 und T2 hochohmig, d.h. nicht leitend, sind. Angesteuert werden die Halbleiter-Endstufen T1 und T2 von einer elektronischen Steuereinheit STE, die mit einem Mikrorechner realisiert ist und eine Anzahl von Ausgängen 1,2 hat, die der Anzahl der Halbleiter-Endstufen T1 und T2 entspricht. Die Grundform des Stromes I1 und I2, die in den Erregerwicklungen L1 und L2 auftreten, ist der Fig. 2 zu entnehmen. Die Anstiegsflanken Te und die Abfallflanken Ta des Stromes in L1 und L2 sind abgeflacht und erstrecken sich über endliche Zeitabschnitte.

Dabei werden die Steuersignale SK1 und SK2 mit einer Kommutierungsfrequenz nacheinander zur wiederholten Ansteuerung der Halbleiter-Endstufen T1 und T2 verwendet.

Die Anzahl der Halbleiter-Endstufen und die Anzahl der Steuerausgänge der Steuereinheit STE richtet sich nach der Bauart des Motors und kann auch größer als 2 sein.

Der Steuereinheit STE ist eine Kommutierungseinrichtung KE und ein PWM-Generator PWM-G zugeordnet, die in Fig. 1 als getrennte Funktionseinheiten gezeichnet sind, aber mit der Steuereinheit STE als elektronische Motorsteuerung zusammengefaßt sind. Diese Darstellung ist gewählt, um die Wirkungsweise der Motorsteuerung besser erklären zu können.

Wie an dem PWM-Generator PWM-G gezeigt ist, kann ein Sollwert Nₛₒₗₗ für die Drehzahl oder die Leistung des Motors vorgegeben oder vorgebbar sein und über eine Taktvorgabeeinrichtung TV wird abhängig vom Istwert Nᵢₛₜ der Drehzahl oder der Leistung eine Anzahl von Stufen für die Anstiegs- und die Abfallflanken Te und Ta des Stromes I1 und I2 in den Erregerwicklungen L1 und L2 vorgegeben. Dabei werden vorzugsweise Drehzahlbereiche festgelegt, denen eine bestimmte Anzahl von Stufen zugeordnet wird. Die Anstiegsflanken Te sind in m Stufen und die Abfallflanken Ta in n Stufen unterteilt. Die Anzahl m und n kann unterschiedlich oder auch gleich gewählt werden, sie ändert sich jedoch in Abhängigkeit von dem Signal der Taktvorgabeeinrichtung TV, das ja abhängig ist von dem Istwert Nᵢₛₜ und diesem zugeordneten Drehzahl- oder Leistungsbereich in der Taktvorgabeeinrichtung TV.

Die Kommutierungseinrichtung KE liefert Kommutierungssignale SKE nach Fig.3, die mit Steuerimpulsen ska und ske den Anfang der Ströme I1 und I2 und den Beginn des Abschaltevorganges der Steuersignale markieren.

Anhand der Fig. 4 wird in vergrößerter Darstellung das Steuersignal einer Halbleiter-Endstufe während einer Abfallflanke Ta dargestellt.

Es muss noch erwähnt werden, dass der Sollwert Nₛₒₗₗ am PWM-Generator PWM-G bewirkt, dass die PWM-Signale ein entsprechend zugeordnetes Pulsweiten-Verhältnis PWVₛₒₗₗ aufweisen, das während des konstanten Verlaufes der Ströme I1 und I2 vorherrrscht und diese im Rhythmus der Taktfrequenz des PWM-Generators PWM-G taktet.

Ist zu Beginn des Abschaltvorganges das Pulsweitenverhältnis PWVₛₒₗₗ z.B. 0,8 wie Fig. 4 zeigt und hat die Taktvorgabeeinrichtung TV bei dem Istwert Nᵢₛₜ eine Anzahl n = 4 von Stufen zugeordnet, dann wird in den vier Stufen der Abfallflanke Ta das Pulsweitenverhältnis ausgehend vom vorliegenden Wert PWVₛₒₗₗ = 0,8 in Stufen reduziert, die gegeben sind durch PWVₛₒₗₗ geteilt durch die Anzahl n = 4. Diese Reduzierung des Pulseitenverhältnisses erfolgt dann so, dass die folgenden Stufen ein Pulsweitenverhältnis von 0,6, 0,4 und 0,2 aufweisen, wie die Steuerimpulse U1a, U2a, U3a, Una der Spannung U für die Halbleiter-Endstufe T1 nach Fig. 4 zeigen. Dabei kann die letzte Stufe mit PWVe = 0,2 enden. Das Pulsweitenverhältnis PWVe = 0,2 kennzeichnet die letzte Stufe der Abfallflanke Ta, sie kann auch mit PWVe = 0 abgeschlossen werden. Nach der Abschaltflanke Ta ist das Pulsweitenverhältnis PWVe dann auf jeden Fall "0". Die Anzahl n der Stufen des Pulsweitenverhältnisses PWV und das Pulsweitenverhältnis in den Stufen bestimmt die Steuereinheit STE unter Verknüpfung der Signale der Kommutierungseinrichtung KE nach Fig. 1, der Kommutierungssignale SKE nach Fig. 3 und der Vorgabe durch die Taktvorgabeeinrichtung TV.

In gleicher Weise können die Anstiegsflanken Te der Steuersignale getaktet werden, wobei der vorgegebene Sollwert Nₛₒₗₗ den zu erreichenden Betriebswert PWVₛₒₗₗ für den PWM-Generator PWM-G vorgebt, der am Ende der Anstiegsflanke Te erreicht sein soll. Entsprechend diesem Betriebswert legt die Taktvorgabeeinrichtung TV die Anzahl m der Stufen für das Pulsweitenverhältnis PWV in den Anstiegsflanken Te fest. Die Steuerimpulse nehmen in der Anstiegsflanke Te nicht ab, sondern in umgekehrter Reihenfolge der Fig. 4 entsprechend zu, bis der Steuerimpuls U1a dem Betriebswert PWVₛₒₗₗ entspricht. Auch in den Anstiegsflanken Te kann sich die Anzahl m der Stufen in Abhängigkeit vom Sollwert Nₛₒₗₗ und dem Istwert Nᵢₛₜ ändern. Die Anzahl m und n wird vorzugs-weise durch die Grundzahl 2 mit unterschiedlichen Potenzen gewählt, z.B. 2², 2³ und 2⁴ gleich 4,8 und 16, da dies zu einem minimalen Aufwand in der Tat-vorgabeeinrichtung TV und der Steuereinheit STE führt.

Es muß noch darauf hingewiesen werden, dass die getakteten Steuersignale mit ihren Steuerimpulsen die Halbleiter-Endstufen T1 und T2 stets voll durchsteuern, um deren Verlustleistung möglichst klein zu halten.

## Patentansprüche

1. Verfahren zum Steuern eines elektronisch kommutierbaren Motors, dessen Erregerwicklungen (L1, L2) über Halbleiter-Endstufen (T1, T2) mittels Steuersignalen (SK1, SK2) mit einer Kommutierungsfrequenz nacheinander angesteuert und mit einer Versorgungsgleichspannung (U_{batt}) verbunden und von dieser abgeschaltet werden, wobei sich die aufeinander folgenden Steuersignale (SK1, SK2) überlappen und im Überlappungsbereich mindestens eines der Steuersignale (SK1, SK2) pulsweitenmoduliert getaktet wird, so dass der Strom (I1, I2) in den Erregerwicklungen (L1, L2) in den Anstiegsflanken (Te) zunimmt und in den Abfallflanken (Ta) abnimmt, wobei die Steuersignale (SK1, SK2) in Abhängigkeit von einem vorgebbaren Sollwert (Nₛₒₗₗ) der Drehzahl oder der Leistung des Motors verändert werden, wobei als Steuersignale (SK1, SK2) pulsweitenmodulierte Signale mit einem vom vorgegebenen Sollwert (Nₛₒₗₗ) abhängigen Betriebswert (PWVₛₒₗₗ) verwendet werden, wobei in den Anstiegsflanken (Te) der Steuersignale (SK1, SK2) das Pulsweitenverhältnis (PWV) in einer vom Sollwert (Nₛₒₗₗ) oder einem Istwert (Nᵢₛₜ) abhängigen Anzahl von m Stufen von einem niedrigen Anfangswert (PWV₀) auf diesen Betriebswert (PWVₛₒₗₗ) zunehmend ausgebildet wird und in den Abfallflanken (Ta) der Steuersignale (SK1, SK2) das Pulsweitenverhältnis (PWV) in einer Anzahl von n Stufen ausgehend von diesem Betriebswert (PWVₛₒₗₗ) abnehmend bis zu einem Abschaltendwert (PWVe) vorgenommen wird, bevor das Pulsweitenverhältnis (PWV) auf den Wert Null zurückgeführt wird, wobei auch diese Anzahl von n Stufen vom Sollwert (Nₛₒₗₗ) oder Istwert (Nᵢₛₜ) abhängig gemacht wird, **dadurch gekennzeichnet, dass** der Anfangswert (PWV₀) durch den dem Sollwert (Nₛₒₗₗ) zugeordneten Betriebswert (Pwvₛₒₗₗ) geteilt durch die Anzahl der m Stufen des Pulsweitenverhältnisses (PWV) in den Anstiegsflanken (Te) vorgegeben wird und der Abschaltendwert (PWVe) durch den dem Sollwert (Nₛₒₗₗ) zugeordneten Betriebswert (PWVₛₒₗₗ) geteilt durch die Anzahl der n Stufen des Pulsweitenverhältnisses (PWV) in den Abfallflanken (Ta) vorgegeben wird.

2. Verfahren nach Anspruch 1,
**dadurch gekennzeichnet,**
**dass** die Anzahl der m und n Stufen in den Anstiegsflanken (Te) und den Abfallflanken (Ta) gleich gewählt wird.

3. Verfahren nach Anspruch 1 oder 2,
**dadurch gekennzeichnet,**
**dass** die m und n Stufen des Pulsweitenverhältnisses (PWV) in den Anstiegsflanken (Te) und/oder den Abfallflanken (Ta) der Steuersignale (SK1, SK2) sich mindestens über eine Periode der Taktfrequenz (ft) der PWM-Signale aufrecht erhalten.

4. Verfahren nach einem der Ansprüche 1 bis 3,
**dadurch gekennzeichnet,**
**dass** vorgegebenen oder vorgebbaren Drehzahl- oder Leistungsbereichen des Motors unterschiedliche Anzahlen von m und n Stufen (m = n = 4 bzw. 8 bzw. 16) des Pulsweitenverhältnisses (PWV) zugeordnet werden und
**dass** entsprechend dem Istwert (Nᵢₛₜ) der Drehzahl oder der Leistung des Motors die zugeordnete Anzahl von m und n Stufen (4 oder 8 oder 16) des Pulsweitenverhältnisses (PWV) in den Anstiegsflanken (Te) und/oder den Abfallflanken (Ta) der Steuersignale zur Wirkung gebracht werden.

5. Verfahren nach einem der Ansprüche 1 bis 4,
**dadurch gekennzeichnet,**
**dass** in den m Stufen der Anstiegsflanken (Te) der Steuersignale (SK1, SK2) das Pulsweitenverhältnis (PWM) von Stufe zu Stufe um den Anfangswert (PWVₒ) zunehmend gewählt wird.

6. Verfahren nach einem der Ansprüche 1 bis 5,
**dadurch gekennzeichnet,**
**dass** in den n Stufen der Abfallflanken (Ta) der Steuersignale (SK1, SK2) das Pulsweitenverhältnis (PWV) schrittweise von Stufe zu Stufe um den Abschalteendwert (PWVe) abnehmend gewählt wird.

## Claims

1. Method for controlling an electronically commutable motor whose exciter windings (L1, L2) are driven in succession by means of control signals (SK1, SK2) with a commutation frequency using semiconductor output stages (T1, T2), and are connected to a D.C. supply voltage (U_{batt}) and are switched off by it, wherein the successive control signals (SK1, SK2) overlap and are clocked in the overlapping region of at least one of the control signals (SK1, SK2) in a pulse-width-modulated fashion, with the result that the current (I1, I2) in the exciter windings (L1, L2) increases in the rising edges (Te) and decreases in the falling edges (Ta), wherein the control signals (SK1, SK2) are changed as a function of a predefinable setpoint value (Nₛₑₜₚ) of the rotational speed or of the power of the motor, wherein pulse-width-modulated signals with an operating value (PWVₛₑₜₚ) which is dependent on the predefined setpoint value (Nₛₑₜₚ) are used as control signals (SK1, SK2), wherein in the rising edges (Te) of the control signals (SK1, SK2) the pulse width ratio (PWV) is formed increasing, in a number of m steps, dependent on the setpoint value (Nₛₑₜₚ) or an actual value (N_{act}), from a low initial value (PWV₀) to this operating value (PWVₛₑₜₚ), and in the falling edges (Ta) of the control signals (SK1, SK2) the pulse width ratio (PWV) is implemented decreasing in a number of n steps starting from this operating value (PWVₛₑₜₚ) to a switch-off final value (PWVe) before the pulse width ratio (PWV) is returned to the value zero, wherein this number of n steps is also made dependent on the setpoint value (Nₛₑₜₚ) or actual value (act), **characterized in that** the initial value (PWV₀) is predefined by the operating value (PWVₛₑₜₚ), assigned to the setpoint value (Nₛₑₜₚ), divided by the number of m steps of the pulse width ratio (PWV) in the rising edges (Te), and the switch-off final value (PWVe) is predefined by the operating value (PWVₛₑₜₚ), assigned to the setpoint value (Nₛₑₜₚ), divided by the number of n steps of the pulse width ratio (PWV) in the falling edges (Ta).

2. Method according to Claim 1, **characterized in that** an equal number of m and n steps is selected in the rising edges (Te) and the falling edges (Ta).

3. Method according to Claim 1 or 2, **characterized in that** the m and n steps of the pulse width ratio (PWV) in the rising edges (Te) and/or the falling edges (Ta) of the control signals (SK1, SK2) are maintained over at least one period of the clocking frequency (ft) of the PWM signals.

4. Method according to one of Claims 1 to 3, **characterized in that** different numbers of m and n steps (m = n = 4 or 8 or 16) of the pulse width ratio (PWV) are assigned to predefined or predefinable rotational speed ranges or power ranges of the motor, and
**in that** the assigned number of m and n steps (4 or 8 or 16) of the pulse width ratio (PWV) in the rising edges (Te) and/or the falling edges (Ta) of the control signals are implemented in accordance with the actual value (N_{act}) of the rotational speed or the power of the motor.

5. Method according to one of Claims 1 to 4, **characterized in that** the pulse width ratio (PWM) is selected to increase from step to step by the initial value (PWV₀) in the m steps of the rising edges (Te) of the control signals (SK1, SK2).

6. Method according to one of Claims 1 to 5, **characterized in that** the pulse width ratio (PWV) is selected to decrease incrementally from step to step by the switch-off final value (PWVe) in the n steps of the falling edges (Ta) of the control signals (SK1, SK2).

## Revendications

1. Procédé pour commander un moteur à commutation électronique dont les enroulements d'excitateur (L1, L2) sont commandés l'un après l'autre par le biais d'étages finaux à semiconducteur (T1, T2) au moyen de signaux de commande (SK1, SK2) à une fréquence de commutation et sont reliés à une tension continue d'alimentation (U_{batt}) et déconnectés de celle-ci, les signaux de commande (SK1, SK2) successifs se chevauchant et au moins l'un des signaux de commande (SK1, SK2) étant modulé en largeur d'impulsion dans la plage de chevauchement de telle sorte que le courant (I1, I2) dans les enroulements d'excitateur (L1, L2) augmente dans les fronts montants (Te) et diminue dans les fronts descendants (Ta), les signaux de commande (SK1, SK2) étant modifiés en fonction d'une valeur de consigne (Nₛₒₗₗ) pouvant être prédéfinie de la vitesse de rotation ou de la puissance du moteur, les signaux de commande (SK1, SK2) utilisés étant des signaux modulés en largeur d'impulsion ayant une valeur de service (PWVₛₒₗₗ) dépendante de la valeur de consigne (Nₛₒₗₗ) prédéfinie, le rapport de largeur d'impulsion (PWV) dans les fronts montants (Te) des signaux de commande (SK1, SK2) étant réalisé croissant à partir d'une petite valeur de début (PWV₀) jusqu'à cette valeur de service (PWVₛₒₗₗ) en un nombre m de paliers qui dépend de la valeur de consigne (Nₛₒₗₗ) ou d'une valeur réelle (Nᵢₛₜ) et, dans les fronts descendants (Ta) des signaux de commande (SK1, SK2), le rapport de largeur d'impulsion (PWV) est réalisé décroissant à partir de cette valeur de service (PWVₛₒₗₗ) jusqu'à une valeur finale de coupure (PWVe) en un nombre n de paliers avant que le rapport de largeur d'impulsion (PWV) soit ramené à la valeur nulle, ce nombre n de paliers étant lui aussi rendu dépendant à la valeur de consigne (Nₛₒₗₗ) ou à la valeur réelle (Nᵢₛₜ), **caractérisé en ce que** la valeur de début (PWV₀) est prédéfinie par la division de la valeur de service (PWVₛₒₗₗ) associée à la valeur de consigne (Nₛₒₗₗ) par le nombre m de paliers du rapport de largeur d'impulsion (PWV) dans les fronts montants (Te) et la valeur finale de coupure (PWVe) est prédéfinie par la division de la valeur de service (PWVₛₒₗₗ) associée à la valeur de consigne (Nₛₒₗₗ) par le nombre n de paliers du rapport de largeur d'impulsion (PWV) dans les fronts descendants (Ta).

2. Procédé selon la revendication 1, **caractérisé en ce que** les nombres m et n de paliers dans les fronts montants (Te) et les fronts descendants (Ta) sont choisis identiques.

3. Procédé selon la revendication 1 ou 2, **caractérisé en ce que** les m et n paliers du rapport de largeur d'impulsion (PWV) dans les fronts montants (Te) et/ou dans les fronts descendants (Ta) des signaux de commande (SK1, SK2) sont maintenus pendant au moins une période de la fréquence d'horloge (ft) des signaux modulés en largeur d'impulsion.

4. Procédé selon l'une des revendications 1 à 3, **caractérisé en ce que** des nombres m et n différents de paliers (m = n = 4 ou 8 ou 16) du rapport de largeur d'impulsion (PWV) sont associés à des plages prédéfinies ou pouvant être prédéfinies de vitesses de rotation ou de puissances du moteur et que le nombre m et n de paliers (4 ou 8 ou 16) du rapport de largeur d'impulsion (PWV) sont appliqués dans les fronts montants (Te) et/ou les fronts descendants (Ta) des signaux de commande conformément à la valeur réelle (Nᵢₛₜ) de la vitesse de rotation ou de la puissance du moteur.

5. Procédé selon l'une des revendications 1 à 4, **caractérisé en ce que** dans les m paliers des fronts montants (Te) des signaux de commande (SK1, SK2), le rapport de largeur d'impulsion (PWM) est choisi croissant d'un palier à l'autre de la valeur de début (PWV₀).

6. Procédé selon l'une des revendications 1 à 5, **caractérisé en ce que** dans les n paliers des fronts descendants (Ta) des signaux de commande (SK1, SK2), le rapport de largeur d'impulsion (PWV) est choisi décroissant progressivement d'un palier à l'autre de la valeur finale de coupure (PWVe).
